# EUROPEAN PATENT APPLICATION

(11) **EP 1 533 560 A1**
(43) Date of publication of application: **25.05.2005**
(21) Application number: 03078687.5
(22) Date of filing: 19.11.2003
(51) Int. Cl.: F16L 55/165, E03F 3/06, E03F 5/02, E02F 3/92, E02F 5/00, E21B 7/18

(54) **Method of relining an underground pipe**

(71) Applicant: Uponor Innovation AB, 513 81 Fristad (SE)
(72) Inventor: Forssell, Fredrik, 513 96 Fristad (SE)
(74) Representative: Harrison Goddard Foote

(57) **Abstract**

A method of relining an underground service pipe (1) which comprises:
- (a): providing a riser pipe (4) having a distal end,
- (b): installing the riser pipe (4) by excavating a hole (5) and lowering the riser pipe (4) through the hole (5) thus formed until the distal end of the riser pipe (4) is adjacent the underground service pipe (1),
- (c): severing a section of the service pipe (1),
- (d): removing the severed section of service pipe (1) to leave an upstream section (3) and a downstream section (2) of service pipe (1) remaining,
- (e): installing a chamber (20) in the riser pipe (4), said chamber (20) being provided with sealing means (34) for sealing said chamber (20) to the riser pipe (4) and having first and second lateral openings comprising respectively an upstream inlet (25) and a downstream outlet (26),
- (f): installing a liner pipe (40) into the downstream section (2) of the service pipe (1),
- (g): sealing the liner pipe (40) to the downstream outlet (26) of the chamber (20), and
- (h): sealing the upstream section (3) of the service pipe (1) to the upstream inlet (25) of the chamber (20).
Furthermore, a method of installing a riser pipe is described.

## Description

This invention relates to a method of relining an underground pipe, and more particularly to a method of relining an underground service pipe using a riser pipe.

Many methods of repairing or renovating a sewage pipe system by installing a plastics pipe in an existing sewer pipe have been proposed. In GB 2041147 there is described such a method in which a flexible polyethylene liner pipe is inserted in an existing sewer pipe through a manhole. As described in EP 0213674, the plastics liner pipe can comprise an outer layer with rigid external corrugations and inner smooth-walled layer of a deformable material. A plastics pipe of this type is also known from FR 2513346. Methods for relining an underground branch conduit of an underground main conduit by introducing into the branch conduit via the main conduit a relining pipe are disclosed in EP 0275910 and in WO00/04318.

Existing methods of relining sewer pipes are difficult to apply when only a portion of the pipe needs to be relined, for example, when a pipe is to be relined up to a pipe junction. Typically this can occur when a sewer main is joined to a branch pipe at a private property border, where responsibility for the maintenance of the pipe within the private property does not rest with the utility company. In such circumstances, relining of the downstream section of the sewer pipe, when there is no access to the end of the section to be relined, is very difficult.

According to the present invention, access to a service pipe for maintenance and/or relining, is obtained by installing a riser pipe.

Further according to the invention there is provided a method for relining a service pipe with a liner pipe, wherein a riser pipe is located adjacent the service pipe and a lateral chamber is installed in the service pipe and sealed to the liner pipe.

In a first aspect, the present invention provides a method of relining an underground service pipe, which comprises
(a) providing a riser pipe having a distal end,
(b) installing the riser pipe so that the distal end of the riser pipe is adjacent the underground service pipe,
(c) severing a section of the service pipe,
(d) removing the severed section of service pipe to leave an upstream section and a downstream section of service pipe remaining,
(e) installing a chamber in the riser pipe, said chamber being provided with sealing means for sealing said chamber to the riser pipe and being provided with first and second lateral openings comprising respectively an upstream inlet and a downstream outlet,
(f) installing a liner pipe in the downstream section of the service pipe,
(g) sealing the liner pipe to the downstream outlet of the chamber, and
(h) sealing the upstream section of the service pipe to the upstream inlet of the chamber.

The method of the invention is particularly applicable to the relining of sewer pipes and will hitherto be more particularly described with reference thereto, although it is to be understood that it could be applied to any other service pipe, for example, a pipe conveying water or other fluids as appropriate.

The riser pipe preferably is formed from a plastics material and preferably has a diameter of from 200 millimetre to 600 millimetre, for example, about 400 millimetre. The distal or lower end of the riser pipe is preferably adapted to conform to the sewer pipe and, for example, the distal end can be configured to straddle the sewer pipe. In a preferred embodiment, the distal end is provided with two diametrically-opposed U-shaped cut-out channels sized to receive the sewer pipe therein and diametrically-opposed legs adapted to straddle the sewer pipe when the riser pipe is lowered thereover.

In a preferred method of installing the riser pipe, ground material is excavated, for example, by air or water pressure, or, more particularly, by vacuum excavation. Vacuum excavation equipment is now commonly available, and is, for example, described in US patents 5016717 and 4921374. In a preferred excavation method, which also comprises a separate and independent further aspect of the invention, the position of the riser pipe is located, and the riser pipe placed vertically in position. Next the nozzle of the excavator is inserted in the riser pipe and ground material removed therethrough. As the excavated material is removed, the riser pipe can be lowered vertically into the hole thus formed. Preferably the removal of the ground material and the lowering of the riser pipe take place simultaneously, so that the pipe is lowered into the hole as it is formed, thereby avoiding any substantial collapse of the sides of the hole and ensuring that the riser pipe fits snugly in the excavated hole.

When the riser pipe is installed in position adjacent to, and preferably, straddling, the sewer pipe, cutting means, which can, for example, comprise a hole-saw mounted on a rotatable shaft, is lowered in the riser pipe until it contacts the sewer pipe. The cutting means is activated to cut a lateral section of sewer pipe within the riser pipe and the cutting means and severed section are then removed through the riser pipe.

A chamber, hereinafter referred to as a lateral chamber, is then lowered into the riser pipe until it reaches the cut ends of the sewer pipe. The chamber is preferably formed from a plastics material, for example, polyethylene. The chamber is preferably provided with locating surfaces in order to orient it with respect to the sewer pipe and has first and second lateral openings which, when correctly positioned, face respectively the upstream and downstream sections of the sewer pipe. The first and second lateral openings of the chamber are preferably provided with re-entrant sealing means having sealing surfaces adapted to be sealed respectively to the upstream and the downstream sections of the severed sewer pipe.

The chamber, which is preferably of generally cylindrical shape, is preferably sized to be a loose fit in the riser pipe. The chamber is preferably provided with a sealing ring located in a recess in its outer circumferential surface in order to seal the chamber to the internal wall of the riser pipe.

In the next step of the method, the downstream section of the severed sewer pipe is re-lined with a liner pipe which can either be pushed or pulled into position. In a preferred embodiment, the liner pipe is pulled through the downstream section of the service pipe using a pulling wire, which is reeled through the riser pipe. A method of installation of a liner pipe is described in EP 0725910, the entire disclosure of which is incorporated herein by reference for all purposes. A suitable lining system for installing a liner pipe in a sewer pipe is manufactured and sold by Uponor AB under the trademark Flexoren.

The corrugated liner pipe is preferably sealed to the sealing surface of the downstream outlet of the lateral chamber using an elastomeric sealing ring or O-ring, which can, for example, be seated between adjacent ribs of the corrugations. Alternatively, the liner pipe could be sealed to the downstream outlet of the chamber using a sealant or a grouting material.

Preferably the upstream section of the severed sewer pipe is sealed to the upstream inlet of the chamber by means of a hollow sealing cylinder, which can comprise, for example, a cut length of plastics pipe. The sealing cylinder can, for example, be partly inserted into the upstream section of the sewer pipe so that it bridges the end of the sewer pipe section and the re-entrance sealing means of the upstream inlet of the chamber. Preferably the outer surface of the sealing cylinder is provided with two or more spaced apart sealing rings. These can comprise, for example, an O-ring adapted to seal against the sealing surface of the re-entrant sealing means of the upstream inlet of the chamber, and a water-swellable sealing ring adapted to seal against the internal wall of the upstream section of the severed sewer pipe.

It will be appreciated that, in the foregoing description, the terms "upstream" and "downstream" are used merely as a matter of convenience, and it would equally be possible for the upstream and downstream directions to be reversed where, for example, a utility company is providing a fluid such as water from a service main to a branch pipe.

An embodiment of the invention will now be described, by way of example only, with reference to the accompanying Drawings in which:
Figure 1 shows, in side elevation, a sewer pipe and a riser pipe about to be installed thereon;
Figure 2 shows, in side elevation, the sewer pipe and riser pipe of Figure 1, with parts of the riser pipe broken away for clarity, and a hole-saw disposed in the riser pipe;
Figure 3 shows, in side elevation, the sewer pipe and riser pipe of Figure 1, with parts of the riser pipe broken away for clarity, with the sewer pipe partly severed by the hole-saw;
Figure 4 shows, in perspective view, a lateral chamber adapted to be disposed in the riser pipe;
Figure 5 shows the lateral chamber of Figure 4 in sectional side elevation;
Figure 6 shows, in part sectional side elevation, the sewer pipe after severing, the riser pipe with parts broken away for clarity, and the lateral chamber of Figures 4 and 5 in position in the riser pipe;
Figure 7 shows the arrangement of Figure 6 with a liner pipe inserted into the downstream section of the sewer pipe;
Figure 8 shows, in part sectional side elevation with parts broken away for clarity, the arrangement of Figure 7 with a sealing cylinder about to be inserted into the upstream section of the sewer pipe; and
Figure 9 shows the completed arrangement, in part section side elevation, with the sealing cylinder positioned in the upstream section of the sewer pipe.

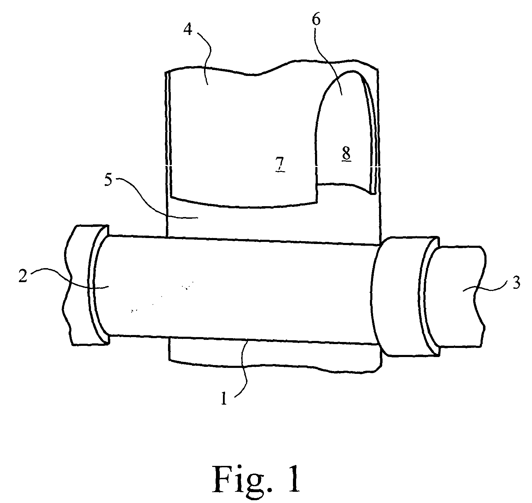

Referring now to Figure 1, there is shown a sewer pipe 1, having a downstream section 2 and an upstream section 3. A riser pipe 4 is positioned within a vertical hole 5, which extends from ground surface to the buried sewer lateral pipe 1. The vertical hole 5 is produced by vacuum excavation, using the riser pipe 4 as a liner for the hole. Ground material is removed through the riser pipe by a vacuum excavator, for disposal on the surface. As the ground material is removed from beneath the riser pipe, the riser pipe is gradually lowered into the hole thus formed. This method of installing a riser pipe is a separate and independent aspect of the invention. The riser pipe 4 has two diametrically-opposed, U-shaped, cut-out channels 6 (only one is shown) which divide the distal (lower) end of the riser pipe 4 into two diametrically-oppose legs 7, 8. The channels 6 are adapted to receive the sewer pipe 1 so that the legs 7, 8 straddle the sewer pipe 1.

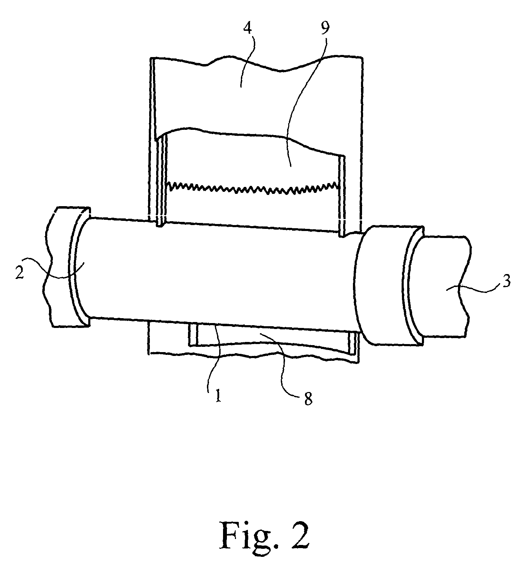

Figure 2 shows the sewer pipe 1 with the riser pipe 4 in position, and the leg 7 broken away to reveal a hole-saw 9 disposed in the riser pipe 4.

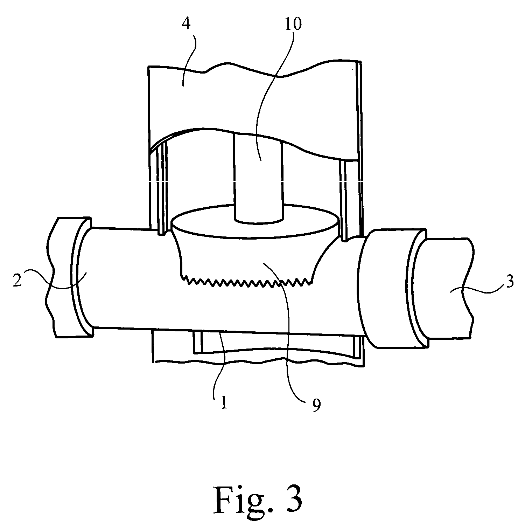

Turning now to Figure 3, the hole-saw 9 is disposed on a shaft 10 that can be rotated from the surface. The hole-saw 9 is shown partly severing the sewer pipe 1.

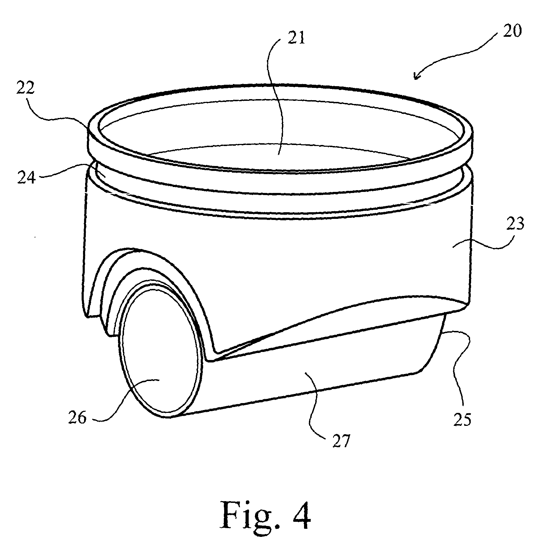

Figure 4 shows an open-topped lateral chamber 20 which can, for example, be rotationally-moulded, or injection moulded, from a suitable thermoplastic polymer material such as, for example, polyethylene or PVC. The chamber 20, which is of generally cylindrical construction, has an open top 21 surrounded by a lip 22 and a generally cylindrical body 23. Adjacent the lip 22 there is provided a circumferential recess 24, the function of which will be explained hereinafter. The chamber 20 has an upstream inlet 25 and a downstream outlet 26 which are situated at the extremities of a horizontally-arranged cylindrical formation 27 which forms the base of the chamber 20.

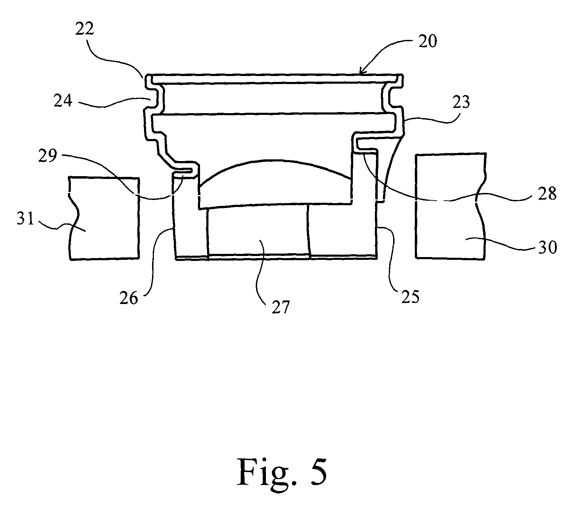

The chamber 20 is shown in sectional side elevation in Figure 5. The upstream inlet 25 is provided with a re-entrant sealing collar 28 and the downstream outlet 26 is similarly provided with a smaller-diameter re-entrant sealing collar 29. The outlets 25 and 26 can, for example, be machined from a rotationally-moulded chamber using hole-saws 30, 31 as illustrated in Figure 5.

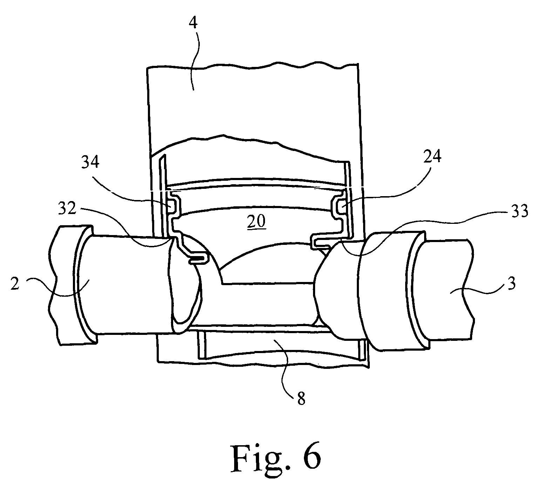

Figure 6 shows the chamber 20 in position. In Figure 6 the severed mid-section of the sewer pipe 1 has been removed through the riser pipe 4, together with the hole-saw 9. The chamber 20 is lowered into the riser pipe until it rests upon the severed sections 2, 3 of the sewer pipe 1. Locating surfaces 32, 33 on the chamber 20 ensure that the chamber 20 is correctly disposed in the riser pipe 4, with the cylindrical formation 27 correctly orientated, so that the inlet 25 is adjacent the upstream section 3 of the severed sewer pipe 2 and the outlet 26 is adjacent the downstream section 2. An elastomeric sealing ring 34 is disposed within the recess 24 so that the chamber 20 makes sealing engagement with the internal wall of the riser pipe 4.

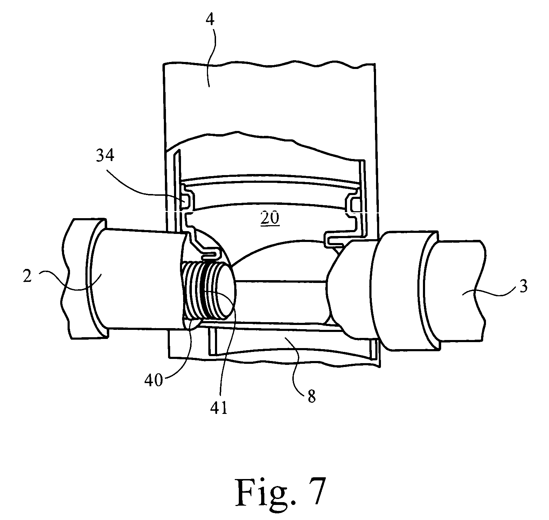

Figure 7 shows the arrangement after the downstream section 2 of the sewer pipe has been re-lined. Relining can be carried out by any suitable means, but preferably there is used a flexible corrugated re-lining pipe, such as, for example, that sold by Uponor AB under the trade mark Flexoren. The liner pipe 40 can be pushed or pulled through the downstream section 2 of the sewer pipe, and, for example, a pulling wire (not shown) attached to the liner pipe can be reeled up through the riser pipe 4. When the liner pipe 40 is in position, a curing or grouting mixture can be injected between the liner pipe and the internal wall of the downstream sewer pipe section 2. The curing or grouting mixture can be prevented from exuding from the severed end of the downstream section of the sewer pipe 2 by means of an end plate (not shown). After curing and grouting, the pulling head, or any other means of attachment of the end of the corrugated liner 40 to the pulling wire, can be cut off using a wire saw. The corrugated liner 40 is sealed to the re-entrant sealing collar 29 of the downstream outlet 26 by an elastomeric O-ring 41 which fits between adjacent ribs of the corrugated liner 40.

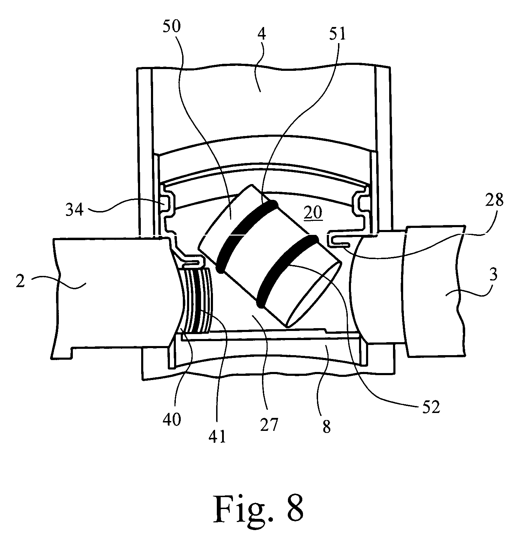

The method of sealing the upstream section 3 of the severed sewer pipe 1 to the chamber 20 is illustrated in Figure 8. A plastics hollow sealing cylinder 50 is lowered through the riser pipe 40 until it reaches the cylindrical bottom 27 of the chamber 20. The sealing cylinder 50 carries on its outer surface an elastomeric O-ring 51, adapted to seal against the re-entrant sealing collar 28 of the chamber 20, and, spaced apart therefrom, a second O-ring 52, which is made from an elastomeric material that swells in contact with water. When the sealing cylinder 50 is inserted into the severed end section 3 of the sewer pipe the water-swellable O-ring 52 expands in order to seal the sealing cylinder to the severed upstream sewer pipe section 3.

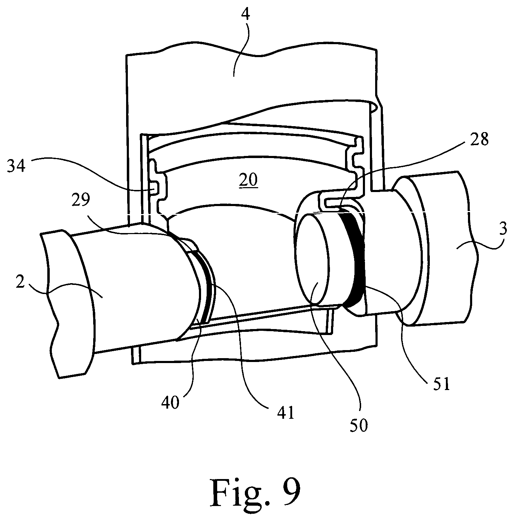

The completed construction is shown in Figure 9. The chamber 20 is sealed to the riser pipe 4 by the sealing ring 34, the upstream section 3 of the sewer pipe is sealed to the chamber by the sealing cylinder 50 and O-rings 51, 52, and the liner pipe 40 in the downstream section 2 of the sewer pipe is sealed to the chamber 20 by the sealing ring 41. A telescopic cast-iron lid can be fixed to the proximal end of the riser pipe to complete the installation, if required.

The method of the invention provides a simple and practical method of re-lining a sewer pipe up to, for example, the border of a private property, and for the installation of a riser pipe, with minimal excavation.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A method of relining an underground service pipe which comprises:
(a) providing a riser pipe having a distal end,
(b) installing the riser pipe by excavating a hole and lowering the riser pipe through the hole thus formed until the distal end of the riser pipe is adjacent the underground service pipe,
(c) severing a section of the service pipe,
(d) removing the severed section of service pipe to leave an upstream section and a downstream section of service pipe remaining,
(e) installing a chamber in the riser pipe, said chamber being provided with sealing means for sealing said chamber to the riser pipe and having first and second lateral openings comprising respectively an upstream inlet and a downstream outlet,
(f) installing a liner pipe in the downstream section of the service pipe,
(g) sealing the liner pipe to the downstream outlet of the chamber, and
(h) sealing the upstream section of the service pipe to the upstream inlet of the chamber.

2. A method according to claim 1, in which the service pipe is a sewer pipe.

3. A method according to claim 1 or 2, in which the riser pipe has a distal end adapted to conform to the service pipe.

4. A method according to claim 3, in which the riser pipe is installed with its distal end straddling the service pipe.

5. A method according to claim 4, in which the distal end of the riser pipe is provided with two diametrically-opposed U-shaped cut-out channels forming diametrically-opposed legs adapted to straddle the service pipe.

6. A method according to any one of the preceding claims, in which the riser pipe is installed by excavating material through the riser pipe.

7. A method according to any one of the preceding claims, in which the riser pipe is installed by vacuum excavation.

8. A method according to any one of the preceding claims, in which the severed section of service pipe lies within the riser pipe.

9. A method according to claim 8 which comprises introducing cutting means into the riser pipe and severing the service pipe therewith.

10. A method according to any one of the preceding claims, in which the chamber is of generally cylindrical shape and is provided with a sealing ring located in a recess in its outer circumference for sealing against the riser pipe internal wall.

11. A method according to any one of the preceding claims, in which the chamber is provided with locating surfaces and is lowered into the riser pipe until the locating surfaces contact the upstream section and the downstream section of the severed service pipe.

12. A method according to any one of the preceding claims, in which the first and second lateral openings of the chamber are provided with re-entrant sealing means adapted to be sealed respectively to the upstream section and the downstream section of the severed service pipe.

13. A method according to any one of the preceding claims, in which the liner pipe comprises a flexible corrugated plastics pipe which is pushed or pulled through the downstream section of the service pipe.

14. A method according to claim 13, in which the liner pipe is pulled through the downstream section of the service pipe using a pulling wire which is reeled through the riser pipe.

15. A method according to any one of the preceding claims, in which the liner pipe is sealed to the downstream outlet of the chamber using an O-ring.

16. A method according to any one of the preceding claims, in which curing or grouting material is injected into the annular space between the liner pipe and the downstream section of the severed service pipe and cured or hardened.

17. A method according to any of the preceding claims, in which the upstream section of the severed service pipe is sealed to the upstream inlet of the chamber by a hollow sealing cylinder which is partly inserted into the upstream section of the severed service pipe.

18. A method according to claim 17, in which the sealing cylinder is provided on its outer surface with an O-ring adapted to seal against the re-entrant sealing means of the upstream inlet of the chamber, and a water-swellable sealing ring adapted to seal against the internal wall of the upstream section of the severed service pipe.

19. A method of installing a riser pipe, which comprises placing a riser pipe in position vertically above its desired ground location, lowering a nozzle of a vacuum excavator into the riser pipe, applying a vacuum so as to remove ground material located beneath the riser pipe through the riser pipe for disposal, and lowering the riser pipe into the hole formed by removal of the said ground material.

20. A method according to claim 19, wherein the removal of the ground material and the lowering of the riser pipe take place simultaneously, so that the pipe is lowered into the hole as it is formed.
